# EUROPEAN PATENT APPLICATION

(11) **EP 2 230 865 A1**
(43) Date of publication of application: **22.09.2010**
(21) Application number: 09700950.0
(22) Date of filing: 07.01.2009
(51) Int. Cl.: H04W 28/04, H04J 1/00, H04J 11/00, H04L 1/16, H04L 29/02, H04W 28/18

(54) **RADIO TRANSMISSION DEVICE AND RETRANSMISSION CONTROL METHOD**

(30) Priority: 07.01.2008 JP 2008000796
(71) Applicant: Panasonic Corporation, Kadoma-shi Osaka 571-8501 (JP)
(72) Inventor: IMAMURA, Daichi, Osaka-shi, Osaka 540-6207 (JP); NISHIO, Akihiko, Osaka-shi, Osaka 540-6207 (JP)
(74) Representative: Grünecker, Kinkeldey, Stockmair & Schwanhäusser Anwaltssozietät
(86) International application number: PCT/JP2009/000026
(87) International publication number: WO 2009/087965

(57) **Abstract**

Provided is a radio transmission device which can simultaneously reduce: a radio resource consumption amount required for signaling to report band allocation information and a HARQ operation mode, and a transmission packet collision ratio accompanying a reception error of the band allocation information. The radio transmission device includes a transmission control unit (209) which inputs an encoding ratio, an initial transmission data range, a modulation method, a physical resource-to-be-transmitted position information to an encoding unit (211), a retransmission data selection unit (212), a modulation unit (213), and a mapping unit (214), respectively according the allocated radio resource and transmission parameter reported in the allocation information, if any allocation information is present. On the other hand, if no allocation information is present, the transmission control unit (209) judges whether to perform retransmission using a predetermined transmission parameter or terminate the retransmission according to the HARQ mode information and predetermined allocation radio resource information obtained from an allocation resource table unit (210).

## Description

### Technical Field

The present invention relates to a radio transmission apparatus and a retransmission control method.

### Background Art

In mobile communication systems, ARQ (Automatic Repeat reQuest) is adopted to downlink data from a radio communication base station apparatus (hereinafter a "base station") to a mobile communication mobile station apparatus (hereinafter a "mobile station"). That is, a mobile station (UE) feeds back a response signal showing a downlink data error detection result to a base station. A mobile station performs error detection for downlink data using CRC (Cyclic Redundancy Check), and feeds back an ACK (Acknowledgment) if CRC=OK (no error) or a NACK (Negative Acknowledgment) if CRC=NG (error present), as a response signal, to a base station. This response signal is transmitted to the base station using uplink control channels, including, for example, a PUCCH (Physical Uplink Control Channel) and an uplink L1/L2 CCH (L1/L2 Control Channel).

Likewise, ARQ is adopted to uplink data from a mobile station to a base station. A base station feeds back a response signal showing an uplink data error detection result to a mobile station. A base station performs error detection for uplink data using CRC, and feeds back an ACK if CRC=OK (no error) or a NACK if CRC=NG (error present), as a response signal, to a mobile station. This response signal is transmitted to a mobile station using downlink control channels, including, for example, a PHICH (Physical Hybrid ARQ Indicator Channel) and a downlink L1/L2 CCH (L1/L2 Control Channel).

Conventionally, synchronous non-adaptive HARQ is studied as an uplink ARQ method (e.g. see Non-Patent Document 1). HARQ (Hybrid ARQ) refers to a retransmission control method combining FEC (Forward Error Correction) and ARQ. "Synchronous" in synchronous non-adaptive HARQ represents that a timing (time interval) a packet same as the previous packet is retransmitted is determined in advance between the transmission side and the reception side, and "non-adaptive" represents that radio resource information and transmission parameter information (hereinafter "allocation information") allocated by a scheduler only upon the initial transmission are reported and a retransmission is started by using a NACK as a trigger without allocation information being reported upon retransmission. Here, with regards to allocation radio resources and transmission parameters upon retransmission, retransmission data is transmitted using a transmission timing, radio resources and transmission parameters determined between a transmitting apparatus and a receiving apparatus in advance on a per retransmission time basis. In synchronous non-adaptive HARQ, allocation information is reported only upon the initial transmission, so that it is possible to reduce signaling overhead required to report allocation information upon retransmission.

Meantime, when a plurality of packets are transmitted at the same timing in a system in which a plurality of packets are subject to frequency division multiplexing (FDMA), only part of the packets are usually retransmitted among these packets transmitted at the same time. As described above, with the synchronous non-adaptive HARQ method, allocation radio resources and transmission parameters upon retransmission depend on only allocation information upon the initial transmission, and therefore, a situation in which retransmitting packets scatter over the frequency resources occurs (i.e. resource fragmentation). Particularly, in a system using a single carrier method including SC-FDMA (Single Carrier FDMA) and CDMA-FDMA, continuous bands need to be allocated to one packet, and therefore, when resource fragmentation occurs, large continuous bands cannot be allocated to one mobile station, causing a significant decrease in peak data rate and making scheduling difficult.

Furthermore, as a radio resource allocation method (scheduling method), studies are conducted for a persistent scheduling method of reporting allocation information (allocation radio resources and transmission parameter information) for a plurality of times of initial transmissions in advance (e.g. see Non-Patent Document 2). Persistent scheduling reports allocation information (allocation radio resources and transmission parameter information) for a plurality of times of initial transmissions in advance, so that it is possible to reduce signaling overhead required to report allocation information upon the initial transmission. However, in a system adopting the above synchronous non-adaptive HARQ and persistent scheduling at the same time, a case where a collision occurs between a retransmission packet by synchronous non-adaptive HARQ and the initial transmission packet by persistent scheduling.

To overcome these problems, synchronous adaptive HARQ is studied as an uplink HARQ method (e.g. see Non-Patent Document 3). "Adaptive" in synchronous adaptive HARQ represents that allocation information can be reported upon a retransmission of a packet, retransmission data is transmitted according to the allocation radio resources and transmission parameters designated by allocation information when allocation information is reported, and that, when there is not allocation information, as in synchronous non-adaptive HARQ, upon receiving a NACK, retransmission data is transmitted using the transmission timings, the radio resources and the transmission parameters determined between the transmitting apparatus and the receiving apparatus in advance on a per retransmission time basis.

Further, there is another method of providing a plurality of types of NACKs showing reception data errors and notifying the operations of synchronous non-adaptive HARQ, retransmission stop and asynchronous adaptive HARQ using each NACK (e.g. see Non-Patent Document 4). "Asynchronous" in asynchronous adaptive HARQ represents that retransmission data is transmitted according to allocation radio resources and transmission parameters designated by allocation information when the allocation information is reported and retransmission is not performed when there is not allocation information.
Non-Patent Document 1: R1-060175, "Redundancy Version and Modulation Order for Synchronous HARQ," 3GPP TSG-RAN WG1 LTE Adhoc, Helsinki, Finland, January 23-25, 2006
Non-Patent Document 2: R2-071460, Nokia, "Uplink Scheduling for VoIP," 3GPP TSG-RAN WG2 Meeting #57bis, St. Julians, Malta, March 26-30, 2007
Non-Patent Document 3: R2-071251, Nokia, "Synchronous adaptive HARQ for E-UTRAN UL," 3GPP TSG-RAN WG2 Meeting #57bis, St. Julians, Malta, March 26-30 2007
Non-Patent Document 4: R1-062573, LG Electronics, "Alternative Uplink Synchronous HARQ schemes," 3GPP TSG RAN WG1 #46bis, Seoul, Korea, October 9-13, 2006

### Disclosure of Invention

### Problems to be Solved by the Invention

However, in the synchronous adaptive HARQ method in Non-Patent Document 3, when allocation information is received with error upon receiving the allocation information as report, retransmission data is transmitted (in uplink) or received (in downlink) using the transmission timings, the radio resources and the transmission parameters determined between a transmitting apparatus and a receiving apparatus in advance. Accordingly, when radio resource allocation is changed by allocation information, a collision with a transmission packet of another mobile station occurs in uplink, and therefore it is difficult for the base station to receive collided packets correctly. Further, in downlink, a mobile station receives packets addressed to other mobile stations and performs reception by HARQ combining, and therefore it is difficult to receive packets correctly. Furthermore, to reduce these collisions and the rate of producing wrong combinations of received packets, it is necessary to use transmission parameters less susceptible to errors by increasing transmission power for allocation information and by lowering a coding rate, and therefore the amount of radio resource consumption (transmission power and time and frequency resources) required for signaling increases.

Further, in the HARQ method of reporting a plurality of types of NACKs in Non-Patent Document 4, when a decision of a reported NACK is not correct and a NACK different from the reported NACK is decided, the same problem will occur. Specifically, a NACK showing transmission stop or asynchronous adaptive HARQ is decided as a NACK showing synchronous non-adaptive HARQ.

It is therefore an object of the present invention to provide a radio transmission apparatus and a retransmission control method that are able to reduce the amount of radio resource consumption required for signaling needed to report band allocation information and HARQ operation modes and reduce the rate of collisions between transmission packets accompanied by reception errors of band allocation information.

### Means for Solving the Problem

The radio transmission apparatus of the present invention provides a radio transmission apparatus used in a radio communication system in which a first retransmission method is defined with respect to a first radio resource area and a second retransmission method is defined with respect to a second radio resource area and adopts a configuration including: a decision section that decides whether or not all or part of predetermined retransmission radio resources are included in the first radio resource area; and a transmission section that, when all or part of the retransmission radio resources are included in the first resource area, retransmits data using the first retransmission method.

The retransmission control method of the present invention provides a retransmission control method used in a radio communication system in which a first retransmission method is defined with respect to a first radio resource area and a second retransmission method is defined with respect to a second radio resource area and includes: deciding whether or not all or part of predetermined retransmission radio resources are included in the first radio resource area; and retransmitting data using the first retransmission method when all or part of the retransmission radio resources are included in the first resource area.

### Advantageous Effects of Invention

According to the present invention, with radio resources for adopting asynchronous HARQ, it is possible to switch to asynchronous HARQ without reporting control information expressly per mobile station, so that switching errors from synchronous HARQ to asynchronous HARQ accompanied by reception errors of allocation information do not occur. Therefore, according to the present invention, it is possible to reduce the amount of radio resources for allocation information allocated to an excessive degree and the rate of collisions between transmission packets. Consequently, according to the present invention, it is possible to reduce the amount of radio resource consumption required for signaling needed to report band allocation information and HARQ operation modes and reduce the rate of collisions between transmission packets accompanied by reception errors of band allocation information.

### Brief Description of Drawings

FIG.1 is a block diagram showing a configuration of a base station according to an embodiment of the present invention;
FIG.2 is a block diagram showing a configuration of a mobile station according to an embodiment of the present invention;
FIG.3 shows an example (example 1) of relationships between radio resources and HARQ operation setting according to an embodiment of the present invention;
FIG.4 shows an example of relationships between radio resource positions (i.e. sub-frames) and rates of producing the allocation information about cases (cases A, B and C) where a retransmission using allocation information is carried out;
FIG.5 shows a flow chart of the operations in a transmission control section according to an embodiment of the present invention;
FIG.6 shows the switching between HARQ operation modes and the retransmission steps based on radio resources according to an embodiment of the present invention; and
FIG.7 shows an example (example 2) of relationships between radio resources and HARQ operation setting according to an embodiment of the present invention.

### Best Mode for Carrying Out the Invention

Now, embodiments of the present invention will be described in detail with reference to the accompanying drawings.

Now, cases will be explained where HARQ retransmission is controlled with respect to uplink data transmission in a TDMA-FDMA system. Also, cases will be explained with an example as a retransmission control method where synchronous adaptive HARQ is normally adopted and switched to asynchronous adaptive HARQ as necessary.

Here, synchronous adaptive HARQ is a retransmission control method in which timings retransmission packets are transmitted are determined between the transmission side and the reception side in advance, and in which, if there is the allocation information, retransmission is performed according to allocation radio resources and transmission parameters reported in allocation information and, if there is not allocation information and a NACK alone is fed back, retransmission is performed using allocation radio resources and transmission parameters determined the transmission side and the reception side in advance.

Further, asynchronous adaptive HARQ is a retransmission control method in which timings retransmission packets are transmitted are not determined between the transmission side and the reception side in advance, and in which, if there is the allocation information, retransmission is performed according to allocation radio resources and, transmission parameters reported in allocation information, and retransmission is not performed as long as there is not allocation information.

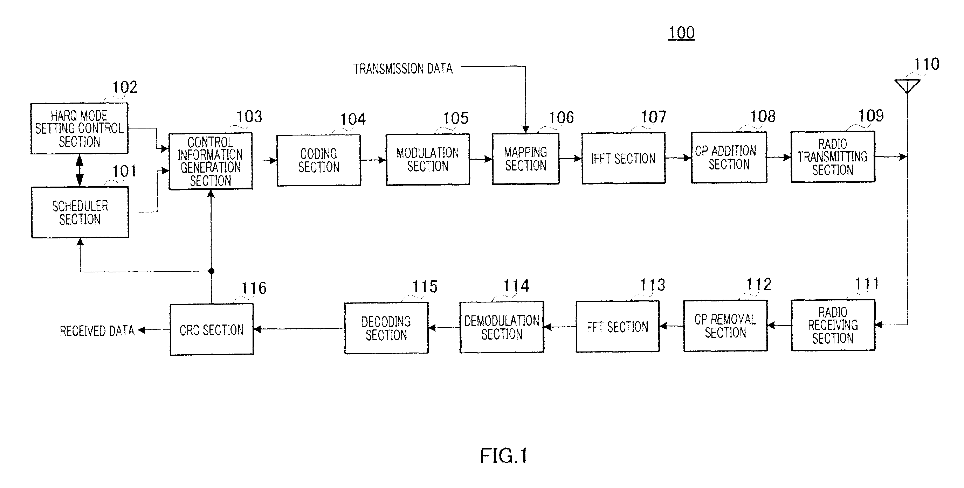

FIG.1 shows the configuration of base station 100 according to the present embodiment.

Scheduler section 101 allocates user data and control information transmitted in downlink and uplink to radio resources and sets up transmission parameters. Further, scheduler section 101 inputs allocation radio resource information allocated to each mobile station and transmission parameter information to control information generation section 103. In this case, scheduler section 101 generates allocation radio resource information and transmission parameter information based on HARQ operation setting information allocated to radio resources and received as input from HARQ mode setting control section 102, and channel quality information, band allocation request information and so on (not shown).

HARQ mode setting control section 102 controls setting of radio resources for adopting synchronous adaptive HARQ and asynchronous adaptive HARQ with respect to radio resources that can be used in the system, and inputs radio resource information for adopting synchronous adaptive HARQ and asynchronous adaptive HARQ (hereinafter "HARQ mode information") to control information generation section 103. The operations of HARQ mode setting control section 102 will be described later in detail.

Control information generation section 103 generates allocation information from the allocation radio resource information and the transmission parameter information and mobile station IDs of each mobile station received as input from scheduler section 101. Further, control information generation section 103 generates HARQ mode information from the radio resource information for adopting synchronous adaptive HARQ and asynchronous adaptive HARQ received as input from HARQ mode setting control section 102. Furthermore, control information generation section 103 generates an ACK or NACK signal based on a decision result received as input from CRC section 116, and outputs the generated signal to coding section 104.

The control information generated in control information generation section 103 is encoded with a predetermined coding method in coding section 104, modulated in a predetermined manner in modulation section 105 and inputted to mapping section 106.

Mapping section 106 maps the modulated control information and encoded and modulated transmission data to predetermined physical resources, and outputs the mapped control information and transmission data to IFFT (Inverse Fast Fourier Transform) section 107.

IFFT section 107 performs an IFFT for a plurality of subcarriers to which the control information and the transmission data are mapped, to generate an OFDM symbol, and outputs the generated OFDM symbol to CP addition (Cyclic Prefix) section 108.

CP addition section 108 attaches the same signal as the tail part of the OFDM symbol, to the beginning of that OFDM symbol, as a CP.

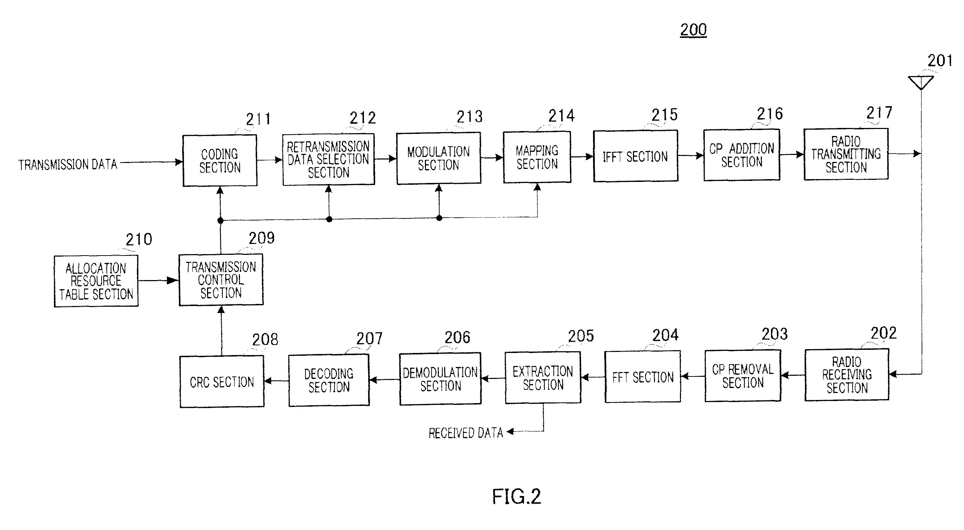

Radio transmitting section 109 performs transmitting processing such as D/A conversion, amplification and up-conversion on the OFDM symbol with a CP, and transmits the OFDM symbol with a CP after transmission processing from antenna 110 to mobile station 200 (FIG.2).

Radio receiving section 111 receives an SC-FDMA symbol transmitted from mobile station 200 via antenna 110, and performs receiving processing including down-conversion and A/D conversion, on the SC-FDMA symbol.

CP removal section 112 removes the CP attached to the SC-FDMA symbol after receiving processing.

FFT (Fast Fourier Transform) section 113 performs an FFT for the SC-FDMA symbol to acquire uplink data mapped to a plurality of subcarriers, and outputs the uplink data to demodulation section 114. This uplink data is demodulated in demodulation section 114, decoded in decoding section 115 and input to CRC section 116.

CRC section 116 performs error detection for the decoded uplink data using CRC, and outputs a decision result (no error or error present) to scheduler section 101 and control information generation section 103.

FIG.2 shows the configuration of mobile station 200 according to the present embodiment.

Radio receiving section 202 receives an OFDM symbol transmitted from base station 100 via antenna 201, and performs receiving processing including down-conversion and A/D conversion on the OFDM symbol.

CP removal section 203 removes the CP attached to the OFDM symbol after receiving processing.

FFT section 204 performs an FFT for the OFDM symbol to acquire control information or downlink data mapped to a plurality of subcarriers, and outputs the control information or downlink data to extraction section 205.

Upon receiving the control information, extraction section 205 extracts control information reported by base station 100 from a plurality of subcarriers, and outputs the extracted control information to demodulation section 206. The extracted control information is demodulated in demodulation section 206 with a predetermined demodulation method, decoded in decoding section 207 and inputted to CRC section 208. Meanwhile, upon receiving data, extraction section 205 extracts downlink data addressed to the mobile station from a plurality of subcarriers according to a radio resource allocation result reported from the base station in advance.

CRC section 208 performs a CRC check for the control information (allocation information and HARQ mode information) received as input from decoding section 207, and, when the information is received correctly, CRC section 208 outputs the decoded allocation information and HARQ mode information to transmission control section 209. Further, CRC check bits are not usually added to ACK/NACK information among control information, and therefore, CRC section 208 decides which signal of an ACK or NACK has been reported, and outputs the decision result (ACK or NACK) to transmission control section 209.

Based on the HARQ mode information, allocation information and ACK/NACK information reported from the base station, transmission control section 209 controls the initial transmission and retransmissions. Specifically, upon the initial transmission, according to the allocation radio resources and the transmission parameters reported in the allocation information, transmission control section 209 inputs the coding rate, the initial transmission data range, the modulation scheme and position information of physical resources to be transmitted, to coding section 211, retransmission data selection section 212, modulation section 213 and mapping section 214, respectively.

On other hand, upon a retransmission, when there is allocation information, according to allocation radio resources and transmission parameters reported in allocation information in the same way as in the initial transmission, transmission control section 209 inputs the coding rate, the initial transmission data range, the modulation scheme and position information of physical resources to be transmitted, to coding section 211, retransmission data selection section 212, modulation section 213 and mapping section 214, respectively. Further, when there is not allocation information, based on the predetermined allocation radio resource information acquired from allocation resource table section 210 and the HARQ mode information, transmission control section 209 decides whether to perform retransmission using predetermined transmission parameters or not to perform retransmission. The operations of transmission control section 209 will be described later in detail.

Allocation resource table section 210 stores the allocation radio resources and transmission parameter information to use for retransmission control in a case where allocation information is not reported and a NACK alone is reported in synchronous adaptive HARQ. That is, the allocation radio resources and transmission parameters upon the initial transmission or retransmission immediately before and the allocation radio resources and transmission parameters, which are uniquely acquired by the number of times of retransmissions, and which are determined in advance between the transmitting apparatus and the receiving apparatus, are stored as allocation radio resources and transmission parameters.

According to the coding method received as input from transmission control section 209, coding section 211 performs error correction coding on transmission data, and retransmission data selection section 212 selects transmission bit sequences as the data to transmit at this time among the encoded transmission data based on the transmission data range information received as input from transmission control section 209, and inputs the selected encoded bit sequences to modulation section 213. Here, the information reporting the transmission data range may be referred to as "RV (redundancy version)."

The encoded bit sequences received as input from retransmission data selection section 212 is modulated according to the modulation scheme designated from transmission control section 209, subject to DFT (Discrete Fourier Transform) processing in order to form an SC-FDMA symbol, and a frequency-domain signal to which transmission data is converted, is inputted to mapping section 214.

Mapping section 214 maps the encoded and modulated transmission data to physical resources designated from transmission control section 209, and outputs the mapped transmission data to IFFT section 215.

IFFT section 215 performs an IFFT for a plurality of subcarriers to which the control information or transmission data are mapped, to generate an SC-FDMA symbol, and outputs the generated SC-FDMA symbol to CP (Cyclic Prefix) addition section 216.

CP addition section 216 attaches the same signal as the tail part of the SC-FDMA symbol, to the beginning of that SC-FDMA symbol, as a CP.

Radio transmitting section 217 performs transmitting processing such as D/A conversion, amplification and up-conversion on the OFDM symbol with a CP, and transmits the OFDM symbol with a CP after transmission processing from antenna 201 to base station 100 (FIG.1).

Next, the HARQ mode setting method in HARQ mode setting control section 102 will be described specifically.

HARQ mode setting control section 102 sets up a plurality of different retransmission methods depending on radio resource positions, that is, sets up HARQ operations, and broadcasts the HARQ operations associated with the set radio resources to a plurality of terminals.

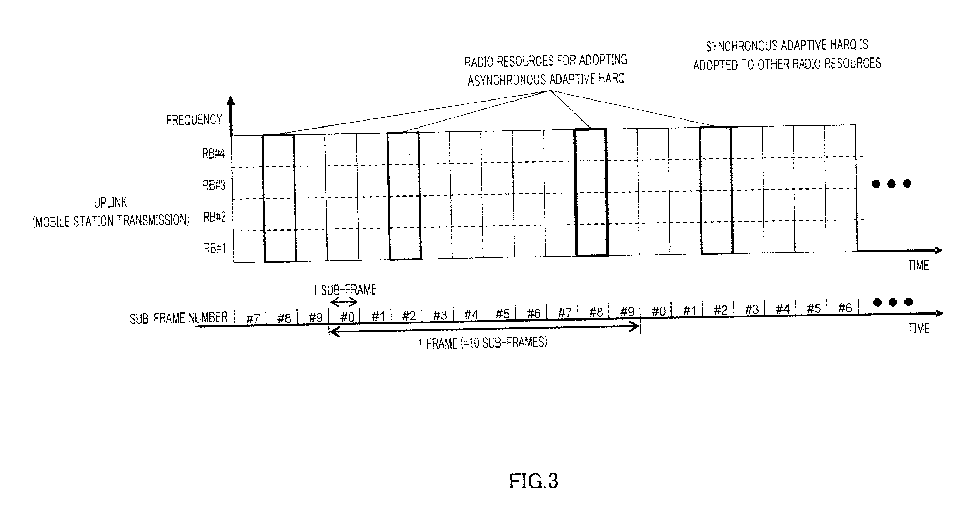

FIG.3 shows an example of relationships between radio resources and HARQ operation setting according to the present embodiment. Here, a case will be explained with an example where a radio resource area (the first radio resource area) in which asynchronous adaptive HARQ is operated and a radio resource area (a second radio resource area) in which synchronous adaptive HARQ is operated, are provided.

Further, the time-domain radio resource allocation unit and the frequency-domain radio resource allocation unit are defined as 1 sub frame and 1 RB (resource block), respectively, and, in FIG.3, a case will be explained as an example where 4 RBs and 10 sub-frames forms one frame in a system bandwidth.

For example, as shown in FIG.3, HARQ mode setting control section 102 sets all (RBs #1 to #4) of sub-frame #2 and sub-frame #8 in the frequency domain as the first radio resource area in which asynchronous adaptive HARQ is operated and sets that radio resources other than that as the second radio resource area in which synchronous non-adaptive HARQ is operated. Setting information, that is, HARQ mode information, is broadcast as a piece of broadcast information from a base station to mobile stations.

Among cases where a base station controls retransmission using allocation information in synchronous adaptive HARQ, retransmissions to change radio resource allocation positions from the allocation radio resources determined between the transmitting apparatus and the receiving apparatus in advance occur in the following situations.
(Case A) where predetermined transmission parameters for a retransmission packet differ from actual channel quality significantly.
(Case B) where another packet with priority (e.g. a packet subject to persistent scheduling) is allocated to predetermined allocation radio resources.
(Case C) where continuous and relatively wideband resources are secured, that is, where resource fragmentation is canceled.

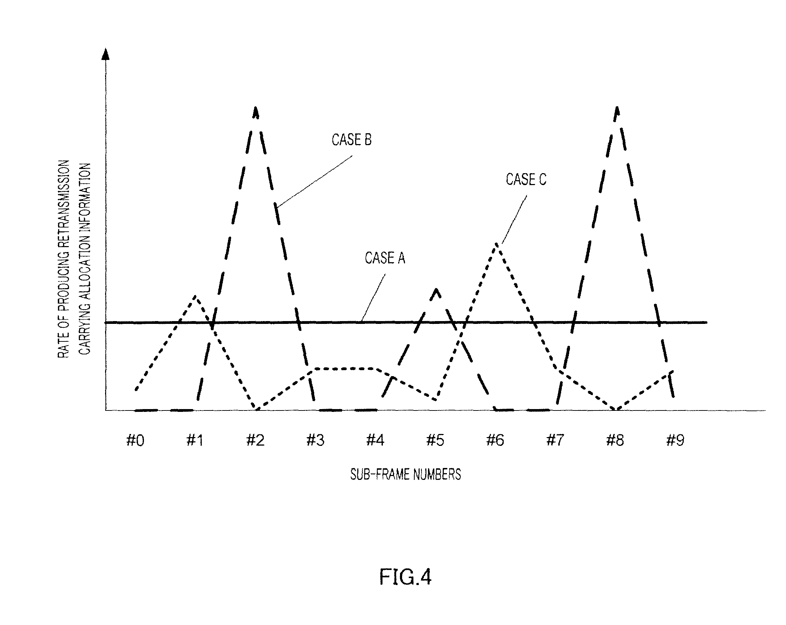

FIG.4 shows an example of relationships between radio resource positions (i.e. sub-frames) and rates of producing allocation information about cases (cases A, B and C) where a retransmission is performed using the allocation information.

Among these cases, in case A, allocation information is produced depending on the location and the mobility of a mobile station, so that, generally, allocation information is produced over radio resources uniformly. Accordingly, it is difficult to predict radio resource positions (i.e. sub-frames and RBs) in which adaptive HARQ using allocation information is performed, in advance.

Next, case B often occurs at sub-frames to which radio resources for the initial transmission in persistent scheduling are allocated.

Scheduler section 101 in the base station is able to control case B, and, by setting the first radio resource area in which asynchronous adaptive HARQ is operated, at sub-frames in which the initial transmission allocation for persistent scheduling is included much, it is possible to prevent problems including packet collisions when a mobile station receives allocation information with errors, without reducing the flexibility of resource allocation.

Lastly, case C occurs in sub-frames where continuous and relatively wideband resources are secured (e.g. sub-frames #1 and #6 in FIG.4).

Further, in case C, the situations where continuous and relatively wideband resources are secured do not occur often. Accordingly, in radio resources where the first radio resource area in which asynchronous adaptive HARQ is operated is set, by securing continuous and relatively wideband resources preferentially, it is possible to prevent problems including packet collisions when a mobile station receives allocation information with errors, without reducing the flexibility of resource allocation.

Next, an example of the specific operations of transmission control section 209 (in a mobile station) based on HARQ mode information will be explained.

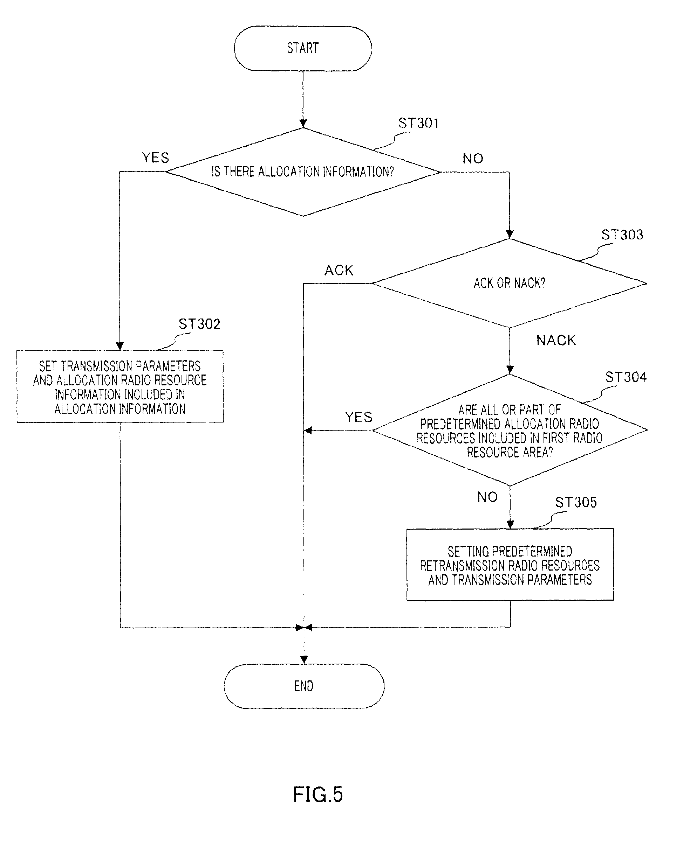

FIG.5 shows an example of a flow chart of the operations in transmission control section 209 according to the present embodiment.

First, in ST (step) 301, whether or not there is allocation information is checked. If there is allocation information addressed to the mobile station ("YES"), the step moves to ST 302, and the transmission parameters (e.g. the coding rate, the initial transmission data range and the modulation scheme) and the allocation radio resource information are set in coding section 211, retransmission data selection section 212, modulation section 213 and mapping section 214 regardless of the initial transmission or a retransmission, and transmission is performed.

On the other hand, in ST 301, if there is not allocation information addressed to the mobile station ("NO"), the step moves to ST 303, and a decision is made whether or not to have received an ACK or NACK addressed to the mobile station.

If the mobile station has received an ACK ("ACK"), a retransmission has succeeded, so that a further retransmission is not performed and the step is finished as it is. If the mobile station receives a NACK ("NACK"), the step moves to ST 304.

Next, in ST 304, transmission control section 209 checks whether or not a transmission in synchronous non-adaptive HARQ mode (i.e. a retransmission using predetermined allocation radio resources and transmission parameters) is possible. Transmission control section 209 reads the predetermined allocation radio resource information to use upon a retransmission in a synchronous non-adaptive HARQ mode, from allocation resource table section 210, and decides whether or not all or part of the read predetermined radio resource positions (i.e. sub-frames and RBs) are included in the range of the first radio resource area (i.e. the area in which an asynchronous adaptive HARQ mode is operated).

If even part of radio resource positions are included the first radio resources ("YES" in ST 304), a retransmission is performed based on asynchronous adaptive HARQ. That is, if there is not allocation information, a retransmission is not performed, and the step is finished as it is. If predetermined allocation resources are not included in the first radio resource area ("NO" in ST 304), transmission control section 209 sets the predetermined transmission parameters for retransmission and allocation radio resources read from allocation resource table section 210 and performs retransmission (ST 305).

In the flow chart of operations in transmission control section 209 shown in FIG. 5, if transmission control section 209 decides that there is not allocation information in the first resource area, that is, there is not allocation information in downlink sub-frames corresponding to the radio resource area using asynchronous adaptive HARQ, regardless of HARQ operation modes set in each radio resource area, the HARQ operation mode may be changed to asynchronous adaptive HARQ mode (that is, a retransmission starts using allocation information alone) until a retransmission request using allocation information comes from the base station. If a HARQ operation mode is returned to synchronous non-adaptive HARQ operation when allocation information is received with errors, a packet collision may occur upon next retransmission, and therefore it is possible to prevent this collision.

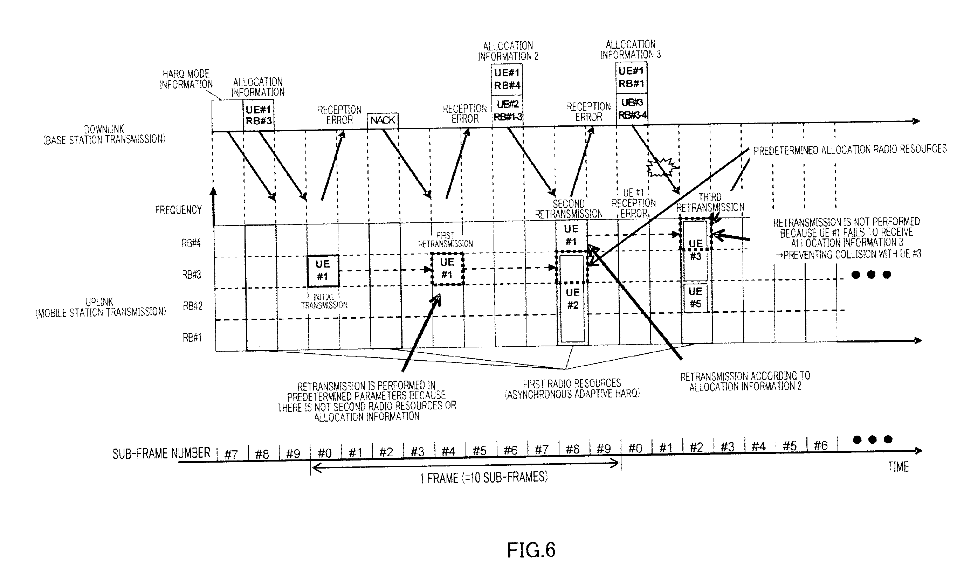

Next, an example of switching between HARQ operation modes and the retransmission steps based on radio resource positions according to the present embodiment will be explained specifically using FIG.6.

Here, the first radio resource area set in asynchronous adaptive HARQ uses the setting shown in FIG.3. Further, predetermined radio resources allocated upon retransmission of a NACK alone in synchronous adaptive HARQ used the same resources as the allocation radio resources designated by allocation information immediately before, and the period (i.e. RTT: round trip time) of retransmitting the same packet is assumed to be 4 sub-frames. Further, HARQ mode information is broadcast periodically together with other broadcast information. Further, a mobile station is referred to as "UE (user equipment)." The values used here are just examples, and are not limited to these values.

In the example of FIG.6, RB #3 in sub-frame #0 is allocated to UE #1 (mobile station #1) as allocation information upon the initial transmission, and therefore the retransmission timings when there is not allocation information upon retransmission are sub-frame #4, #8 and #2 .... and the frequency position of predetermined allocation radio resources used upon retransmission is RB #3.

First, RB #3 in sub-frame #0 is reported as allocation information upon the initial transmission to UE #1 from the base station. The mobile station performs the initial transmission in RB #3 in sub-frame #0 according to the allocation information.

Next, the initial transmission of UE #1 is received with errors in the base station, so that the base station feeds back a NACK signal to UE #1.

RB #3 in sub-frame #4 is not included in the first radio resource area, and therefore the mobile station UE #1 having received a NACK addressed to the mobile station performs retransmission using synchronous non-adaptive HARQ setting, that is, using predetermined allocation radio resources (RB #3 in sub-frame #4).

Further, the base station receives the first retransmission of UE #1 with errors, and therefore requests UE #1 to perform retransmission. However, the next predetermined allocation radio resources (RB #3 in sub-frame #8) are included in the first radio resources, so that the base station reports allocation information instead of a NACK. A NACK may be transmitted in addition to allocation information.

In sub-frame #8, continuous radio resources (RBs #1 to #3) are allocated to another UE, UE #2 (mobile station #2), at the same time, so that the base station cancels resource fragmentation by setting allocation radio resources for UE #1 at RB #4.

UE #1 having received the second allocation information performs the second retransmission in RB #4, according to allocation radio resources (RB #4) of the allocation information. Likewise, UE #2 performs the initial transmission in RBs #1 to #3 according to allocation radio resources (RBs #1 to #3) of the allocation information.

Furthermore, the base station receives the second retransmission of UE #1 with errors, and therefore requests UE #1 to perform retransmission again. However, the next predetermined allocation radio resources (RB #4 in sub-frame #2) are included in the first radio resources and the initial transmission of UE #3 (mobile station #3) is present in RBs #3 and #4, so that the base station reports allocation information (RB #1) to UE #1 instead of a NACK.

In sub-frame #2, the base station allocates continuous radio resources (RBs #3 and #4) to another UE, that is, UE #3, and allocates RB #2 to UE #5 at the same time, so that, by setting allocation radio resources for UE #1 at RB #4, the base station cancels resource fragmentation. Here, UE #5 is subject to persistent scheduling and allocation information is not accompanied upon the initial transmission.

Here, assuming that UE #1 has not correctly received allocation information addressed to UE #1 reported in downlink sub-frame #0. UE #1 does not perform retransmission because the predetermined allocation radio resources (RB #4 in sub-frame #2) to use for a retransmission are included in the first radio resource, and therefore it is possible to prevent the collisions with the initial transmission packet of UE #3.

The above-described operations are repeated until data transmission succeeds or the maximum retransmission count is achieved.

In this way, according to the present embodiment, in a radio communication system adopting synchronous HARQ, it is possible to switch asynchronous HARQ without reporting control information expressly per mobile stations, so that it is possible to reduce the amount of signaling to notify the switching from synchronous HARQ to asynchronous HARQ. Further, switching errors from synchronous HARQ to asynchronous HARQ accompanied by reception errors of allocation information do not occur, and therefore it is possible to reduce a rate of collisions between packets and reduce the amount of radio resources for allocation information allocated excessively in order to reduce the rate of collisions between packets.

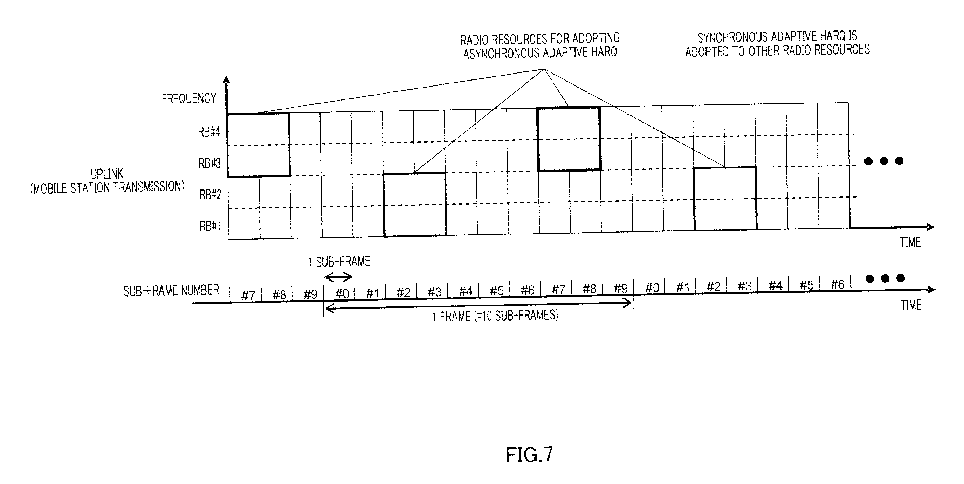

Although use of sub-frame units (time slot units) has been explained as an example of radio resource units associated with HARQ operation modes, the present invention is not limited to this. For example, as shown in FIG.7, different HARQ operation modes may be set to two-dimensional radio resources in time-allocation units (sub-frames) and frequency-allocation units (resource blocks). When the system bandwidth is wide and there are a large number of frequency-allocation units, it is possible to distribute the amount of producing allocation information on a per sub-frame basis.

Further, the radio resources associated with HARQ operation modes are not limited to time and frequency resources, and radio resources in spreading code units may be used in CDMA systems and radio resources may be used in space units (i.e. in stream units or in layer units) in SDMA systems, and therefore these combinations allow the same advantage.

Although synchronous adaptive HARQ have been explained as an example of the retransmission control method of regular use, synchronous non-adaptive HARQ that does not require allocation information upon retransmission may be applicable.

Although cases have been explained as an example where there are two types of HARQ operation modes, the present invention is not limited to this, and there may be two or more types. For example, three types of HARQ operation modes of synchronous non-adaptive HARQ, synchronous adaptive HARQ and asynchronous adaptive HARQ may be associated with radio resources.

Further, although cases have been explained as an example where the method of reporting radio resources and HARQ mode information uses a broadcast channel, the present invention is not limited to the broadcast channel, and multicast transmission that sends reports to a plurality of mobile stations using one control channel may be applicable. Furthermore, by using information that has already been transmitted as broadcast information as the method of reporting radio resources for adopting asynchronous adaptive HARQ, the amount of signaling can be reduced further. For example, radio resource allocation information and radio resource allocation information for uplink control channel transmission that transmit random access channels and random access preambles may be used. Areas for transmitting these control channels preferentially are suitable for radio resources where asynchronous adaptive HARQ is an operation mode.

Further, although the HARQ retransmission control method for uplink data transmission has been explained with the above embodiment as an example, downlink data transmission may be applicable. When HARQ retransmission control is used in downlink, it is realized by associating HARQ operation modes for downlink data transmission with downlink radio resources. Further, although collisions with packets addressed to other mobile stations do not occur in downlink, it is possible to solve the problem of receiving transmission data addressed to other mobile stations as transmission data addressed to the mobile station by HARQ combining.

Further, although cases have been described with the above embodiment as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSIs, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2008-000796, filed on January 7, 2008, including the specification, drawings and abstract, is incorporated herein by reference in its entirety.

### Industrial Applicability

The present invention is applicable to, for example, mobile communication systems.

## Claims

1. A radio transmission apparatus used in a radio communication system in which a first retransmission method is defined with respect to a first radio resource area and a second retransmission method is defined with respect to a second radio resource area, the radio transmission apparatus comprising:
a decision section that decides whether or not all or part of predetermined retransmission radio resources are included in the first radio resource area; and
a transmission section that, when all or part of the retransmission radio resources are included in the first resource area, retransmits data using the first retransmission method.

2. The radio transmission apparatus according to claim 1, wherein, only when the radio transmission apparatus receives band allocation information addressed to the radio transmission apparatus, the first retransmission method comprises a retransmission method of retransmitting data using allocation radio resources and transmission parameters included in the band allocation information.

3. The radio transmission apparatus according to claim 1, wherein, only when the radio transmission apparatus receives a negative acknowledgment signal addressed to the radio transmission apparatus, the second retransmission method comprises a retransmission method of retransmitting data using the retransmission radio resources and transmission parameters.

4. The radio transmission apparatus according to claim 1, wherein the first radio resource area is used to transmit a random access preamble.

5. The radio transmission apparatus according to claim 1, wherein the first radio resource area is used to transmit a control channel.

6. A retransmission control method used in a radio communication system in which a first retransmission method is defined with respect to a first radio resource area and a second retransmission method is defined with respect to a second radio resource area, the retransmission control method comprising:
deciding whether or not all or part of predetermined retransmission radio resources are included in the first radio resource area; and
retransmitting data using the first retransmission method when all or part of the retransmission radio resources are included in the first resource area.
